# EUROPEAN PATENT APPLICATION

(11) **EP 2 583 728 A2**
(43) Date of publication of application: **24.04.2013**
(21) Application number: 12185934.2
(22) Date of filing: 25.09.2012
(51) Int. Cl.: A63F 13/10

(54) **Game apparatus, game control method, and computer-readable non-transitory program**

(30) Priority: 28.09.2011 JP 2011212995
(71) Applicant: Konami Digital Entertainment Co., Ltd., Tokyo 107-8324 (JP)
(72) Inventor: Mizuno, Yuta, Tokyo, 107-8324 (JP)
(74) Representative: Epping - Hermann - Fischer

(57) **Abstract**

A storing unit (210) stores, for example, positions of various objects, such as a player character and an enemy character. A detecting unit (240) detects the object present within a predetermined range according to a position of the player character. A determining unit (260) determines a tactical situation of the player character with regards to the detected object. A changing unit (270) changes activation/deactivation of the lock-on function based on the determined tactical situation. That is, in the case of a melee, etc., the changing unit (270) changes the lock-on function into an activated status, and in the cases other than the melee, etc., the changing unit (270) changes the lock-on function in a deactivated status.

## Description

This application relates generally to a game apparatus, a game control method, and a computer-readable non-transitory program which can appropriately assist a beginner, etc., to play a game.

Conventionally, game apparatuses (video game devices, etc.) for action games, etc., become popular. An example action game allows a player to operate a player character armed with a weapon like a gun or a sword to freely move in a virtual space (a game field, etc.,) and to fight against an enemy character, etc. That is, action games mainly focus on a fight.
Recently, not only such action games mainly focusing on a fight but also action games of an infiltration type which allows a player to move a player character so as to intentionally avoid a fight are also known. The action games of such infiltration type have a feature such that a player character infiltrated in an enemy field is moved in a hidden manner so as not to be found by an enemy character, and to accomplish a predetermined objective.

In most action games, a player character is armed with a weapon like a handgun or a rifle, and can attack a predetermined object (e.g., an enemy character or an enemy vehicle, etc.) appearing in the games using such a weapon. At this time, a sighting symbol indicating a target is displayed in a game screen. Hence, a player causes the sighting symbol to be superimposed on the predetermined object (aiming) to attack the predetermined object.
In action games, in general, in order to assist a beginner, etc., who is not fluent with such games, a so-called "lock-on function" is provided. The lock-on function is to cause the sighting symbol to capture a predetermined object and to automatically track such an object. An aiming operation can be eliminated by the lock-on function, and thus a beginner, etc., can hit the predetermined object with bullets through only an operation of, for example, pulling a trigger.

As an example game using such a lock-on function, for example, Unexamined Japanese Patent Application Kokai Publication No. 2002-95868 discloses a technology for a game that can change the lock-on target.

A player can cope with a melee in a game using the above-explained lock-on function. When, for example, a player character encounters, for example, a large number of enemy character at once or is followed by an enemy vehicle or the like having a great offensive power, the player can break through such an occasion relatively easily using the lock-on function.
According to the above-explained action games of the infiltration type, however, the constant use of the lock-on function is often inexpedient. When, for example, the player attempts to snipe an enemy character (e.g., a watch stander) who is not aware of the presence of the player character with a rifle equipped with a silencer, it is necessary to surely get the enemy character in one shot. That is, if the enemy character is given an opportunity to return fire, the other enemy characters can figure out the presence of the player character through the sound of gunshot, etc., in the return fire. Hence, in order to eliminate the chance of return fire, it is necessary to aim at a particular site of the enemy character like a head. However, when the lock-on function is used, a center (e.g. an abdominal site,.) of the enemy character is uniformly aimed. Accordingly, even if the bullet hits the enemy character, the enemy character may have a chance to return fire. Hence, in such a case, it is necessary for the player to cancel the lock-on function and to manually aim and fire the gun at the head, e.g., of the enemy character.
Conversely, in a melee, successive firing without a failure is essential for the player to survive, and thus the player activates the lock-on function to efficiently get the enemy characters and the enemy vehicles, etc.

That is, in the case of the action games of the filtration type, e.g., it is necessary for the player to change activation/deactivation of the lock-on function depending on the scene and the situation in the games without the constant use of the lock-on function. The activation/deactivation of the lock-on function forces the player to take extra operations, and quickness is needed for such activation/deactivation. Hence, it is a heavy burden for a beginner, etc., who is not as experienced with the games, and it is difficult for such a player to change the activation/deactivation of the lock-on function.

Accordingly, a development of a game apparatus has been desired which can assist a beginner, etc., to change the activation/deactivation of the lock-on function.

The present invention has been made in view of the above-explained circumstance, and it is an objective of the present invention to provide a game apparatus, a game control method, and a computer-readable non-transitory program which can appropriately assist a beginner, etc., to play a game.

A first aspect of the present invention provides a game apparatus which realizes a lock-on function of locking on, for a player character, a predetermined object as a target for attack and which includes a detector, a determiner, and a changer. The player character is a character operated by a player, and is armed with a weapon, such as a hand gun or a rifle. The predetermined object is an object which can be a target for an attack by the player character, and is, for example, an enemy character or an enemy vehicle. The target for attack during the game is indicated by, for example, a sight symbol. The lock-on function is a function of trapping the predetermined object and of automatically tracking such an object. Hence, when the lock-on function is activated, the sight symbol automatically tracks the object in accordance with a motion thereof. Conversely, when the lock-on function is deactivated, the sight symbol is moved arbitrary through an operation of manually aiming the site at an object by the player.

The detector detects the object present within a predetermined range according to a position of the player character. The determiner determines a tactical situation of the player character with regards to the detected object. Note that the tactical situation is a concept including not only a situation whether or not, for example, the player character is advantageously progressing in a battle, but also a moving situation when the player character and the degree of proficiency, etc. The changer changes activation/deactivation of the lock-on function based on the determined tactical situation. When, for example, the tactical situation is a melee, the changer changes the lock-on function into an activated status. Conversely, when the tactical situation is not a melee the changer changes the lock-on function to a deactivated status.

Accordingly, activation/deactivation of the lock-on function is changed in accordance with the tactical situation. Hence, it becomes unnecessary for the player to manually change the activation/deactivation of the lock-on function, and the player can focus on other operations. That is, in the case of, for example, a melee, the lock-on function is changed so as to be activated, and thus the player can focus on a trigger operation. Conversely, in the cases other than a melee, the lock-on function is changed so as to be deactivated, and thus the player can, for example, aim and fire at a particular site (e.g., the head of an enemy character).
As a result, it is unnecessary for the player to manually activate/deactivate the lock-on function, and thus it becomes possible to appropriately assist a beginner, etc., to play a game.

The determiner may determine whether the tactical situation is advantageous or disadvantageous for the player character (whether the tactical situation is advantageous or disadvantageous is determined not only by whether or not the player character advantageously progresses in a battle but is also determined based on a moving situation and the degree of proficiency), and the changer may change the lock-on function in a deactivated status when the determiner determines that the tactical situation is advantageous (predominant) for the player character, and may change the lock-on function in an activated status when the determiner determines that the tactical situation is disadvantageous (backfoot) for the player character.
In this case, when the player character is at a disadvantage situation, the lock-on function is changed so as to be activated, and thus the player can focus on a trigger operation, etc. Conversely, when the player character is in a predominant situation, the lock-on function is changed so as to be deactivated, the player can give operations to, for example, aim a particular site of the object and firing at will.

The determiner may determine the tactical situation based on the success/unsuccess of an attack (the success/unsuccess of an attack means not only a success/failure of an attack by the player character but also a hit probability, the number of successful hits, etc.) from the player character on the object, and the changer may change the lock-on function into a deactivated status when the determiner determines that the tactical situation is advantageous for the player character, and may change the lock-on function into an activated status when the determiner determines that the tactical situation is disadvantageous for the player character.
When, for example, the hit probability from the player character of the object and the number of successful hits are greater than reference values, the determiner determine that the tactical situation is advantageous for the player character. Conversely, when the hit probability, etc., of gunfire from the player character to the object is less than the reference value, the determiner determines that the tactical situation is disadvantageous for the player character. The changer changes activation/deactivation of the lock-on function based on such a determination.
In this case, when the attack by the player character has failed to some level, the lock-on function is changed so as to be activated, the player can attack the object simply through a trigger operation, etc. Conversely, when the attack by the player character has been successful to some level, the lock-on function is changed so as to be deactivated, the player can continuously give operations of, for example, freely aiming at the object and firing.

The determiner may determine the tactical situation based on a movement frequency or a movement distribution of the player character (e.g., the movement frequency indicates a percentage of movement during a certain time, and the movement distribution indicates varying of locations where the movement starts), and the changer may change the lock-on function into a deactivated status when the determiner determines that the tactical situation is advantageous for the player character, and may change the lock-on function into an activated status when the determiner determines that the tactical situation is disadvantageous for the player character.
For example, when the movement distribution is within a narrow range and the movement frequency is low (i.e., when the player character is moving toward a destination without a loss), the determiner determines that the tactical situation is advantageous for the player character. Conversely, when the movement distribution is a wide range and the movement frequency is high (i.e., the player character is moving with a large loss), the determining unit determines that the tactical situation is disadvantageous for the player character. The changer changes activation/deactivation of the lock-on function in accordance with such a determination.
In this case, when, for example, the player character frequently moves in various directions, the lock-on function is changed so as to be activated, the player can attack the object simply through a trigger operation, etc. Conversely, when the player character is moving toward the destination without a loss, the lock-on function is changed so as to be deactivated, the player can give operations of, for example, aiming at a particular site of the object and firing.

The determiner may determine the tactical situation based on the presence/absence of a trap by the player character for the object (the trap means a case in which the object is present within the eyesight range of the player character) or presence/absence of a trap by the object for the player character (the trap means a case in which the player character is present within the eyesight range of the object). The changer may change the lock-on function in a deactivated status when the determiner determines that the tactical situation is advantageous for the player character, and may change the lock-on function in an activated status when the determiner determines that the tactical situation is disadvantageous for the player character.
When, for example, the player character is not found by the enemy character, etc., but the player character finds the object, the determiner determines that the tactical situation is advantageous for the player character. Conversely, when the player character is found by the enemy character but the player character does not find the object, the determiner determines that the tactical situation is disadvantageous for the player character. The changer changes activation/deactivation of the lock-on function based on such a determination.
In this case, when, for example, the player character is found by the object, the lock-on function is changed so as to be activated, the player can attack the object simply through a trigger operation, etc. Conversely, when the player character finds the object, the lock-on function is changed so as to be deactivated, the player can give operations of, for example, aiming at a particular site of the object and firing at will. When the object finds the player character, the determiner may further determine whether or not the tactical situation is advantageous for the player character based on whether or not a distance between the object and the player character is equal to or longer than a predetermined distance.

The determiner may determine the tactical situation based on presence/absence of an attack by the player character for the object or presence/absence of an attack by the object for the player character. The changer may change the lock-on function into a deactivated status when the determiner determines that the tactical situation is advantageous for the player character, and may change the lock-on function into an activated status when the determiner determines that the tactical situation is disadvantageous for the player character.
When, for example, there is no attack from either the player character or the enemy character to the opponent (i.e., when it is in no battle condition), the determiner determines that the tactical situation is advantageous for the player character. Conversely, when either one of the characters attacks the opponent (i.e., when it is in a battle condition), the determiner determines that the tactical situation is disadvantageous for the player character. The changer changes activation/deactivation of the lock-on function based on such a determination.
In this case, when a battle starts, the lock-on function is changed so as to be activated, the player can attack the object simply through a trigger operation, etc. Conversely, when no battle has started, the lock-on function is changed so as to be deactivated, the player can give operations of, for example, aiming at a particular site of the object and firing.

The determiner may determine a degree of proficiency of a player based on a detail of a motion of a player character, and the changer may change the lock-on function into a deactivated status when the determiner determines that the degree of proficiency is high, and may change the lock-on function into an activated status when the determiner determines that the degree of proficiency is low.
The determiner determines the degree of proficiency of the player based on, for example, the number of steps that the player character goes forward with the player character not being found by an enemy. When the determiner determines that the degree of proficiency is high, the changer changes the lock-on function into a deactivated status, and when the determiner determines that the degree of proficiency is low, the changer changes the lock-on function into an activated status.
In this case, the degree of proficiency of the player is determined every time each operation is given during the game, and the status of the lock-on function is changed successively in accordance with the determination. Hence, together with the advancement of the proficiency of the player, the percentage of the operations determined that the degree of proficiency is high among the operations given by the player becomes high. As a result, the higher the proficiency of the player is, the higher the percentage that the lock-on function is deactivated becomes.

The determiner may determine a degree of proficiency of a player, and the changer may drive a probability for activating the lock-on function variable in accordance with the determined degree of proficiency. For example, it is presumed that the changer changes the activation/deactivation of the lock-on function based on the set probability. The determiner sets the probability of activating the lock-on function to be lowered so as to be inversely proportional to the determined degree of proficiency.
In this case, when, for example, the player is a beginner, the determined degree of proficiency is low, and thus the percentage of activating the lock-on function becomes high. Conversely, when the player is an expert, the determined degree of proficiency is high, and thus the percentage of activating the lock-on function becomes low (i.e., the percentage of deactivating the lock-on function becomes high).

The determiner may determine a degree of proficiency of a player in a particular tactical situation, and the changer may change the activation/deactivation of the lock-on function in accordance with the determined degree of proficiency.
The determiner determines the degree of proficiency of the player in, for example, a melee. The changer changes the activation/deactivation of the lock-on function in accordance with the determined degree of proficiency.
In this case, when, for example, the player is good at a melee, the determined degree of proficiency is high, and thus the percentage of deactivating the lock-on function becomes high. Conversely, when the player is not good at the melee, the determined degree of proficiency is low, and thus the percentage of activating the lock-on function becomes high.

A second aspect of the present invention provides a game control method executed by a game apparatus which comprises a detector, a determiner, and a changer and which realizes a lock-on function of locking on, for a player character, a predetermined object as a target for attack, and the game control method comprises a detecting process, a determining process, and a changing process. The player character is a character operated by a player, and is armed with a weapon, such as a hand gun or a rifle. The predetermined object is an object which can be a target for an attack by the player character, and is, for example, an enemy character or an enemy vehicle. The target for attack during the game is indicated by, for example, a sight symbol. The lock-on function is a function of trapping the predetermined object and of automatically tracking such an object. Hence, when the lock-on function is activated, the sight symbol automatically tracks the object in accordance with a motion thereof. Conversely, when the lock-on function is deactivated, the sight symbol is moved arbitrary through an operation of manually aiming the object by the player.

In the detecting process, the detector detects the object present within a predetermined range according to a position of the player character. In the determining process, the determiner determines a tactical situation of the player character with regards to the detected object. Note that the tactical situation is a concept including not only a situation whether or not, for example, the player character is advantageously progressing a battle, but also a moving situation of the player character and the degree of proficiency, etc. In the changing process, the changer changes the activation/deactivation of the lock-on function based on the determined tactical situation. When, for example, the tactical situation is a melee, the lock-on function is changed so as to be activated in the changing process. Conversely, when the tactical situation is not a melee, etc., the lock-on function is changed so as to be deactivated in the changing process.

Accordingly, activation/deactivation of the lock-on function is changed in accordance with the tactical situation. Hence, it becomes unnecessary for the player to manually change the activation/deactivation of the lock-on function, and the player can focus on other operations. That is, in the case of, for example, a melee, the lock-on function is changed so as to be activated, and thus the player can focus on a trigger operation. Conversely, in the cases other than a melee, etc., the lock-on function is changed so as to be deactivated, and thus the player can give operations of, for example, aiming a particular site (e.g., the head of an enemy character) of the object and of firing.
As a result, it is unnecessary for the player to manually change the activation/deactivation of the lock-on function, and thus it becomes possible to appropriately assist a beginner, etc., to play a game.

A third aspect of the present invention provides a computer-readable non-transitory recording medium having stored therein a program that causes a computer (including electronic devices) which realizes a lock-on function of locking on, for a player character, a predetermined object as a target for attack to function as the above-explained game apparatus.

A fourth aspect of the present invention provides a computer-readable non-transitory program that causes a computer (including electronic devices) which realizes a lock-on function of locking on, for a player character, a predetermined object as a target for attack to function as the above-explained game apparatus.

The above-explained program can be recorded on a computer-readable information recording medium, such as a compact disk, a flexible disk, a hard disk, a magneto-optical disk, a digital video disk, a magnetic tape, or a semiconductor memory.

The above-explained program can be distributed and sold over a computer communication network independently from a computer that runs such a program. Moreover, the above-explained information recording medium can be distributed and sold independently from such a computer.

According to the present invention, it becomes possible to appropriately assist a beginner, etc., to play a game.

A more complete understanding of this application can be obtained when the following detailed description is considered in conjunction with the following drawings, in which:
FIG. 1 is an exemplary diagram showing a general configuration of a typical information processing device that realizes a game apparatus according to an embodiment of the present invention;
FIG. 2 is a block diagram for explaining a general configuration of a game apparatus according to a first embodiment;
FIG. 3A is an exemplary diagram showing example information stored in a storing unit;
FIG. 3B is an exemplary diagram showing example information stored in the storing unit;
FIG. 3C is an exemplary diagram showing example information stored in the storing unit;
FIG. 4A is an exemplary diagram showing an example game image;
FIG. 4B is an exemplary diagram showing an example game image;
FIG. 5 is a flowchart for explaining a game control process according to an embodiment of the present invention;
FIG. 6 is an exemplary diagram showing an example movement record stored in a storing unit of a game apparatus according to a second embodiment;
FIG. 7 is an exemplary diagram showing an example eyesight range stored in a storing unit of a game apparatus according to a third embodiment;
FIG. 8A is an exemplary diagram showing an example game image with a lock-on function being activated;
FIG. 8B is an exemplary diagram showing an example game image with a lock-on function being deactivated; and
FIG. 9 is an exemplary diagram showing an example attacking situation stored in a storing unit of a game apparatus according to a fourth embodiment.

An explanation will now be given of embodiments of the present invention. In the following explanation, embodiments in which the present invention is applied to an information processing device will be explained to facilitate understanding of the present invention, but the present invention is likewise applicable to various information processing devices, such as a computer, a PDA, and a cellular phone. That is, the embodiments to be explained below are to explain the present invention, and are not to limit the scope and spirit of the present invention. Hence, embodiments in which each element or all elements are replaced with equivalents can be carried out by those skilled in the art, and such embodiments are also within the scope and spirit of the present invention.

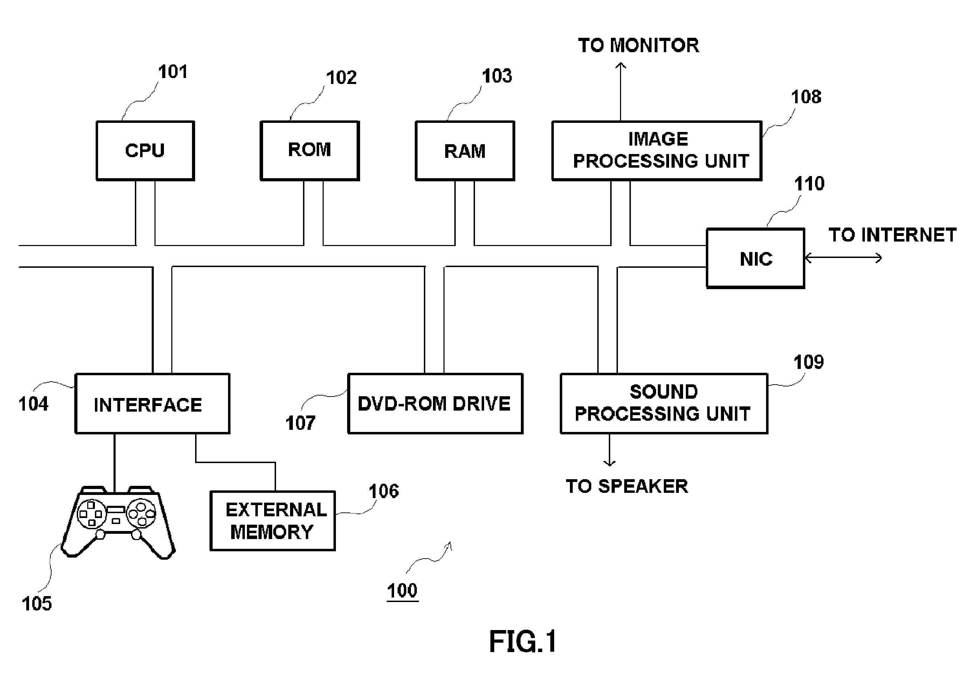

FIG. 1 is an exemplary diagram showing a general configuration of a typical information processing device that realizes a game apparatus according to an embodiment of the present invention. The explanation will be given with reference to this figure.

An information processing device 100 includes a CPU (Central Processing Unit) 101, a ROM (Read Only Memory) 102, a RAM (Random Access Memory) 103, an interface 104, a controller 105, an external memory 106, a DVD (Digital Versatile Disk)-ROM drive 107, an image processing unit 108, a sound processing unit 109, and an NIC (Network Interface Card) 110.

When a DVD-ROM storing a program and data for a game is loaded in the DVD-ROM drive 107 and the information processing device 100 is powered on, such a program is executed to realize the game apparatus according to an embodiment of the present invention.

The CPU 101 controls the overall operations of the information processing device 100, is connected to respective structural elements, and exchanges control signals and data.

The ROM 102 stores an IPL (Initial Program Loader) executed right after the information processing device is activated, and when such an IPL is executed, the program recorded in the DVD-ROM is read in the RAM 103, and the CPU 101 starts executing the read program. Moreover, the ROM 102 also stores an operating system program and various data necessary for controlling overall operations of the information processing device 100.

The RAM 103 temporarily stores data and a program, such as the program and data read from the DVD-ROM and other data necessary for advancement of the game and a chat communication.

The controller 105 connected via the interface 104 receives an input operation given by a user when executing the game. For example, the controller 105 receives input of letter strings (messages), etc., in accordance with an input operation.

The external memory 106 connected via the interface 104 in a freely detachable manner stores, for example, data indicating the advancement of the game, and data for the log (a record) of a chat communication in a rewritable manner. The user can record those pieces of data in the external memory 106 as needed by inputting an instruction through the controller 105.

A DVD-ROM loaded in the DVD-ROM drive 107 records a program for realizing a game and image data and sound data associated with the game. The DVD-ROM drive 107 executes a reading process on the DVD-ROM loaded in the DVD-ROM drive 107 under the control of the CPU 101 to read necessary program and data. Those program and data are temporarily stored in the RAM 103, etc.

The image processing unit 108 processes the read data from the DVD-ROM through an image computing processor (unillustrated) built in the CPU 101 or the image processing unit 108, and records the processed data in a frame memory (unillustrated) built in the image processing unit 108. Image information recorded in the frame memory is converted into video signals (picture signals) at a predetermined synchronization timing, and output to a monitor connected to the image processing unit 108. Hence, image display in various forms is enabled.

The image computing processor is capable of executing transparency operations, such as a superimposing operation of two-dimensional images or α-blending thereof, and various saturated calculations at a fast speed.
Moreover, the image computing processor is also capable of, at a fast speed, executing an operation of rendering polygon information disposed in a virtual three-dimensional space and added with various texture information through a Z-buffering, and of obtaining a rendering image viewing a polygon disposed in the virtual three-dimensional space from a predetermined viewpoint position in a panoramic manner.

The image computing process can cooperatively operate with the CPU 101 to draw a letter string in the frame memory or on each polygon surface as two-dimensional image in accordance with font information defining the shape of a letter. The font information is recorded in the ROM 102, but exclusive font information recorded in the DVD-ROM can be used.

The sound processing unit 109 converts sound data read from the DVD-ROM into analog sound signals, and supplies such analog sound signals to an external speaker to output sound. For example, the sound processing unit 109 generates effective sounds and music data to be output together with the advancement of the game, and causes the speaker to output sound corresponding to such effective sounds and music data under the control of the CPU 101.

The NIC 110 is to connect the information processing device 100 to a computer communication network (unillustrated) like the Internet, and includes a modem compatible with the 10BASE-T/100BASE-T standards used when a LAN (Local Area Network) is established, an analog modem for establishing a connection with the Internet through a phone line, an ISDN (Integrated Services Digital Network) modem, an ADSL (Asymmetric Digital Subscriber Line) modem, or a cable modem for establishing a connection with the Internet through a cable television line, etc., and an interface (unillustrated) serving between one of those modems and the CPU 101.

In addition, the information processing device 100 may use a large-capacity external storage device like a hard disk that can accomplish the same function as those of the ROM 102, the RAM 103, the external memory 106, and the DVD-ROM loaded in the DVD-ROM drive 107, and the like.
Moreover, the information processing device 100 may employ a configuration that is connected with a keyboard that receives an editorial input of a letter string from the user, and a mouse that receives specifying and selecting inputs of various positions, and the like.

Instead of the information processing device 100 of this embodiment, a typical computer (a general-purpose personal computer, etc.) can be utilized as a game apparatus. For example, like the above-explained information processing device 100, a typical computer includes a CPU, a RAM, a ROM, a DVD-ROM drive, an NIC, an image processing unit that has a simplified function than that of the information processing device 100, and a hard disk as an external storage device, and can utilize a flexible disk, an magneto-optical disk, and a magnetic tape, etc. Moreover, a keyboard and a mouse are utilized as input devices instead of the controller. After a game program is installed in such a computer, when the game program is executed, the computer can serve as the game apparatus.

### <First Embodiment>

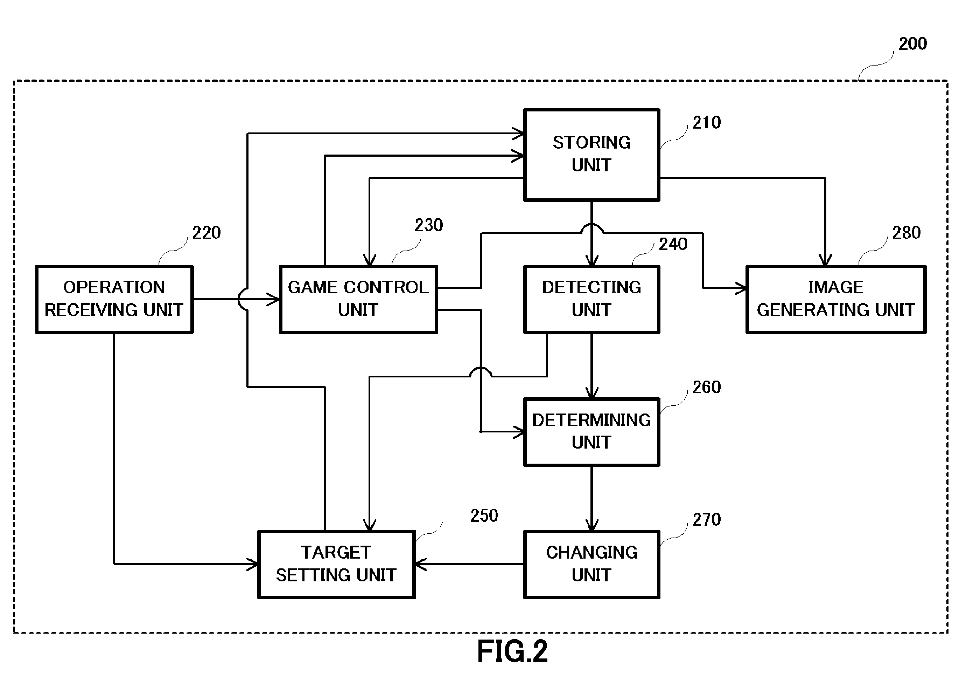

FIG. 2 is an exemplary diagram showing a general configuration of a game apparatus 200 according to a first embodiment of the present invention. As an example, the game apparatus 200 provides an infiltration type action game. The game apparatus 200 has a feature of appropriately controlling a lock-on function for locking on a predetermined object (e.g., an enemy character or an enemy vehicle) as a target for a player character during the game.
More specifically, the game apparatus 200 provides the following infiltration type action game. A player directs a player character to infiltrate in an enemy field (e.g., an enemy facility or enemy territory). A player moves the player character in a hidden manner so as not to be found by objects like enemy characters, and accomplishes a predetermined object. The game apparatus 200 appropriately changes the activation/deactivation of the lock-on function in accordance with a tactical situation during the game. The game apparatus 200 will now be explained in more detail with reference to FIG. 2.

The game apparatus 200 includes a storing unit 210, an operation receiving unit 220, a game control unit 230, a detecting unit 240, a target setting unit 250, a determining unit 260, a changing unit 270, and an image generating unit 280.

The storing unit 210 stores individual pieces of information necessary for managing various objects in the game.
For example, the storing unit 210 stores pieces of information for managing objects, such as the player character and enemy characters.
Information for managing the player character is information on a position of the player character itself in a virtual space and a target position for an attack, etc. Those pieces of information are updated in accordance with an operation given by the player since the player character moves in accordance with the operation given by the player. As will be discussed later, when the lock-on function is activated, the target is automatically set.
Information for managing the enemy characters, etc., is information on a position, etc., of the enemy character in the virtual space. Such information is updated in accordance with the advancement of the game since the enemy characters, etc., move together with the advancement of the game.

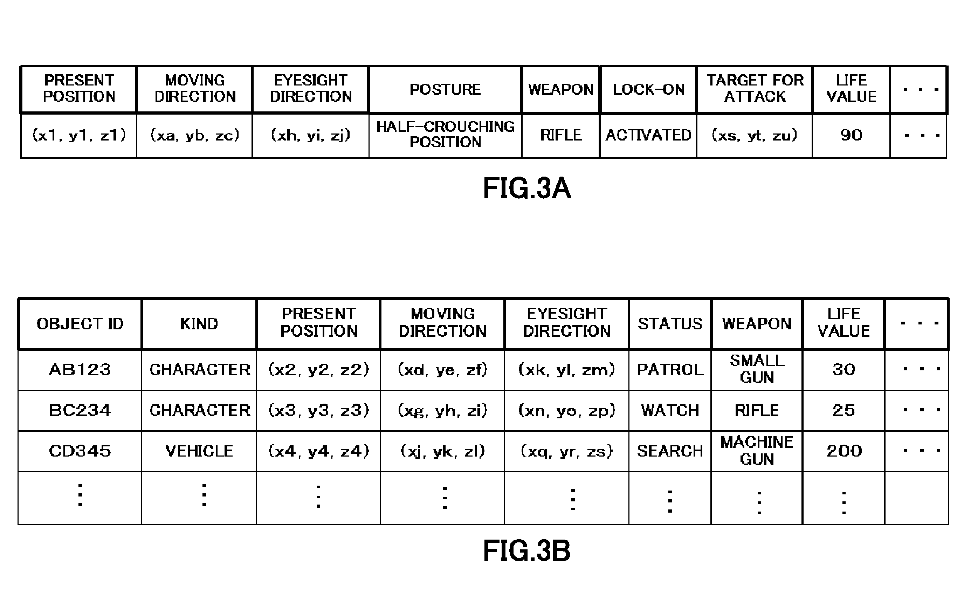

More specifically, the storing unit 210 stores respective pieces of information shown in FIGS. 3A to 3C.
FIG. 3A shows information on the player character which is updated as needed by the game control unit 230 in accordance with, for example, operation information received from the operation receiving unit 220. More specifically, pieces of information shown in FIG. 3A, such as a present position, a moving direction, an eyesight direction, a posture, a weapon, a target for attack, and a life value, etc., are managed in the storing unit 210 as pieces of information on the player character operated by the player. The weapon indicates a weapon currently handled by the player character. The "lock-on" indicates the activation (ON) or deactivation (OFF) of the lock-on function, and is changed accordingly by the changing unit 270 to be discussed later. The target for attack indicates a target position to be attacked through the currently handled weapon. The target for attack is automatically set to a predetermined object when the lock-on function is activated. Conversely, when the lock-on function is deactivated, the target is set in accordance with an operation given by the player. The life value indicates a remaining physical strength, etc., and is subtracted as needed in accordance with, for example, an attack from the object.
FIG. 3B shows information on each object like the enemy character or the enemy vehicle which is automatically updated by the game control unit 230 in accordance with, for example, predetermined logic and parameters. Pieces of information shown in FIG. 3B, such as an object ID, a kind, a current position, a moving direction, an eyesight direction, a status, and a weapon, etc., are managed in the storing unit 210 as pieces of information on each object automatically controlled. Note that objects may include, as needed, an object that has no motion like a hazardous material (e.g., a drum filled with an oil) placed in the enemy field.

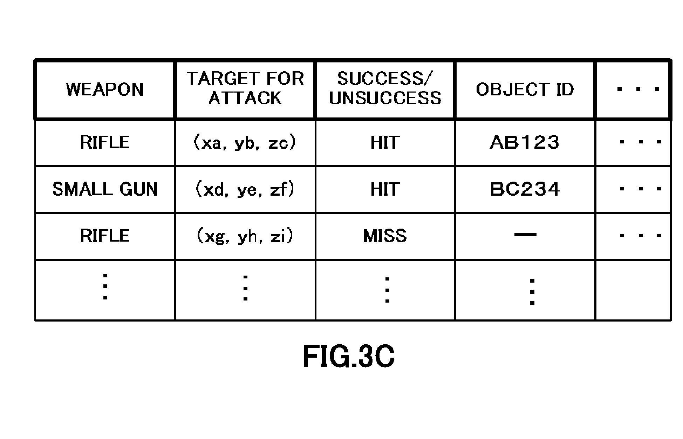

FIG. 3C shows information showing an example attack record by the player character, and for example, a predetermined number of attack records in a newer order among past attacks when the lock-on function is deactivated are stored. More specifically, pieces of information shown in FIG. 3C, such as a target for attack, success/unsuccess of an attack, and an object ID, are managed in the storing unit 210 as the attack records through the manual operation by the player. The success/unsuccess indicates whether or not the attack successfully hit an object. The object ID indicates an object successfully hit (an attacked object).
In addition to those pieces of information, the storing unit 210 also stores image information on each object. That is, the storing unit 210 also stores various pieces of image information necessary for generating game images.
Note that the above-explained RAM 103, etc., can function as such a storing unit 210.

Returning now to FIG. 2, the operation receiving unit 220 receives an operation input like a motion instruction for the player character operated by the player. For example, the operation receiving unit 220 receives motion instructions for moving the player character, such as moving in a predetermined direction, sticking to a wall, squatting, and stretching out to the ground. Moreover, the operation receiving unit 220 receives instructions on motions for causing the player character to attack an object, such as moving a sight (aiming), changing the weapon, and pulling a trigger. As an example, each of those operations are associated with each button (e.g., direction keys, button A, button B, button X, and button Y) disposed in the controller 105, and when the player depresses any one of the buttons, an instruction for the corresponding operation is received.
Note that the above-explained controller 105 can serve as such an operation receiving unit 220.

The game control unit 230 controls the whole game. That is, the game control unit 230 moves the player character and the objects to advance the game.
For example, when the operation receiving unit 220 receives a moving instruction, the game control unit 230 moves the player character in accordance with such an instruction. Moreover, the game control unit 230 moves the objects, such as the enemy character and the enemy vehicle, based on the predetermined movement logic. That is, the game control unit 230 updates the above-explained present position, etc., shown in FIGS. 3A and 3B, and moves the player character and the objects to advance the game.
When, for example, the player character encounters any object (plural objects in some cases) during the game and the battle starts, the game control unit 230 controls the battle, etc., of the player character with regards to the object. That is, when the operation receiving unit 220 receives a moving instruction, the game control unit 230 causes the player character to attack (e.g., firing) the object in accordance with such an instruction. Conversely, the game control unit 230 causes the object to attack the player character based on a predetermined attack logic. At this time, the game control unit 230 determines whether or not the attack from the player and the attack from the object hit the opponent, and subtracts the above-explained life value, etc., shown in FIGS. 3A and 3B.
When the player character attacks the object, the game control unit 230 updates each of the above-explained information shown in FIG. 3C, and stores the attack records of the player character.
Note that the above-explained CPU 101 can serve as such a game control unit 230.

The detecting unit 240 detects the objects present near the player character.
For example, using respective present positions shown in FIGS. 3A and 3B, the detecting unit 240 detects the objects present within a predetermined range with reference to the present position of the player character. That is, the detecting unit 240 detects one or plural enemy characters and enemy vehicles, etc., near the player character.
Note that the above-explained CPU 101 can serve as such a detecting unit 240.

The target setting unit 250 sets the object as the target for attack in accordance with an operation given by the player or the detection by the detecting unit 240.
When, for example, the lock-on function is deactivated, the target setting unit 250 sets the target in accordance with an operation given by the player (an operation of moving the sight cursor). The target setting unit 250 sets the target to a desired position of the object aimed at by the player.
Conversely, when the lock-on function is activated, the target setting unit 250 automatically sets the object detected by the detecting unit 240 as the target. More specifically, the target setting unit 250 sets the object closest to the player character as the target among all objects detected by the detecting unit 240. In more detail, the target setting unit 250 sets the position of the center (e.g., the abdominal site of the enemy character) of the detected and closest object as the target for attack shown in FIG. 3A, and updates the target successively so that the object can be automatically tracked even if the object has moved. That is, when the lock-on function is activated, the target setting unit 250 automatically sets the neighboring object as the target, and automatically tracks the object even if such an object has moved. Hence, when the operation receiving unit 220 receives an attack instruction (an instruction for pulling the trigger), the game control unit 230 can hit the target object with a bullet.
The above-explained CPU 101 can serve as such a target setting unit 250.

The determining unit 260 determines the tactical situation between the player character and the object. That is, the determining unit 260 determines the advantage/disadvantage of the player character in the game in accordance with various relationships between the player character and the enemy character or the enemy vehicle, etc.
For example, the determining unit 260 determines the tactical situation based on the success/unsuccess (success/failure) of the attack by the player character of the object. More specifically, the determining unit 260 tallies the hit probability (the ratio of the number of successful hits with respect to the total number of attacks) and the number of successful hits from the above-explained attack records shown in FIG. 3C, and determines the tactical situation.
More specifically, when tallying the hit probability and the number of successful hits by the player character against the object, if the hit probability and the number of hits are greater than reference values, the determining unit 260 determines that the tactical situation is advantageous for the player character. Conversely, if the hit probability and the number of successful hits are fewer than the reference values, the determining unit 260 determines that tactical situation is disadvantageous for the player character.
The subjects to be tallied are not limited to the hit probability and the number of successful hits, and are optional. For example, a failing probability of attacks (the ratio of the number of unsuccessful attacks with respect to the total number of attacks) and the number of failed attacks (the number of unsuccessful attacks) may be the subjects to be tallied. Those probability and number may be a maximum value or an average value tallied for each predetermined period. Moreover, the number of successful hits or the number of unsuccessful attacks may be a tallied value of successive numbers of such attacks.
The above-explained CPU 101 can serve as such a determining unit 260.

The changing unit 270 changes activation or deactivation of the lock-on function based on the tactical situation determined by the determining unit 260.
For example, when the determining unit 260 determines that the tactical situation is advantageous for the player character, the changing unit 270 deactivates the above-explained lock-on (the lock-on function) shown in FIG. 3A. Conversely, when the determining unit 260 determines that the tactical situation is disadvantageous for the player character, the changing unit 270 activates the lock-on function shown in FIG. 3A.
The above-explained CPU 101 can serve as such a changing unit 270.

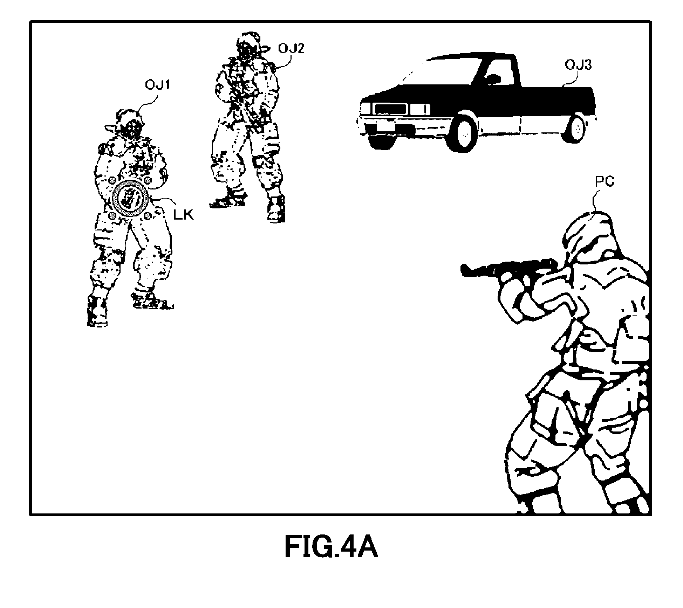

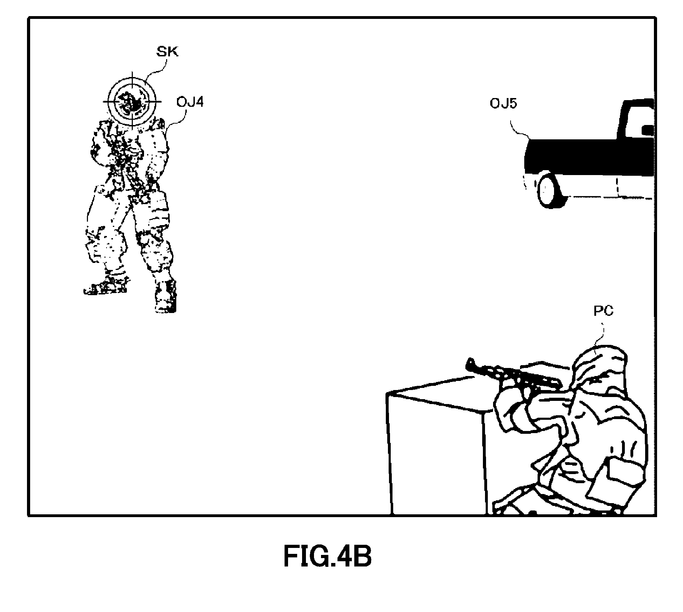

The image generating unit 280 generates game images during the play.
For example, the image generating unit 280 generates the game images based on the information obtained from the storing unit 210 and the game control unit 230.
More specifically, the image generating unit 280 generates game images shown in FIGS. 4A and 4B.

FIG. 4A is an exemplary diagram showing an example game image when the lock-on function is activated. That is, the game image in FIG. 4A shows that the center of an object OJ1 (in this case, the abdominal site of the enemy character) closest to the player character PC among neighboring objects OJ1 to OJ3 is automatically set as the target, and a lock-on cursor LK is superimposed on the target. The player can perceive that the lock-on function is activated through the shape and the color, etc., of the lock-on cursor LK displayed in the game image. The player can hit the target object OJ1 with a bullet by simply giving an operation of pulling a trigger.

FIG. 4B is an exemplary diagram showing an example game image when the lock-on function is deactivated. That is, the game image in FIG. 4B shows that a desired site of an object OJ4 (in this case, the head of an enemy character) is set as the target between adjoining objects OJ4 and OJ5 in accordance with an operation given by the player, and a sight cursor SK is superimposed on the target. The player can perceive that the lock-on function is deactivated through the shape and the color, etc., of the sight cursor SK displayed in the game image. The player takes aim to the target while moving the sight cursor SK as needed. When the sight cursor SK is superimposed on a desired site (in this case, the head of the enemy character), the player gives an operation of pulling a trigger. By firing a gun while taking aim at the head, etc., the player can hit the target enemy character OJ4 with a shot without given an opportunity of return fire.
The image processing unit 108 can serve as such an image generating unit 280.

### <Outline of Operation by Game Apparatus >

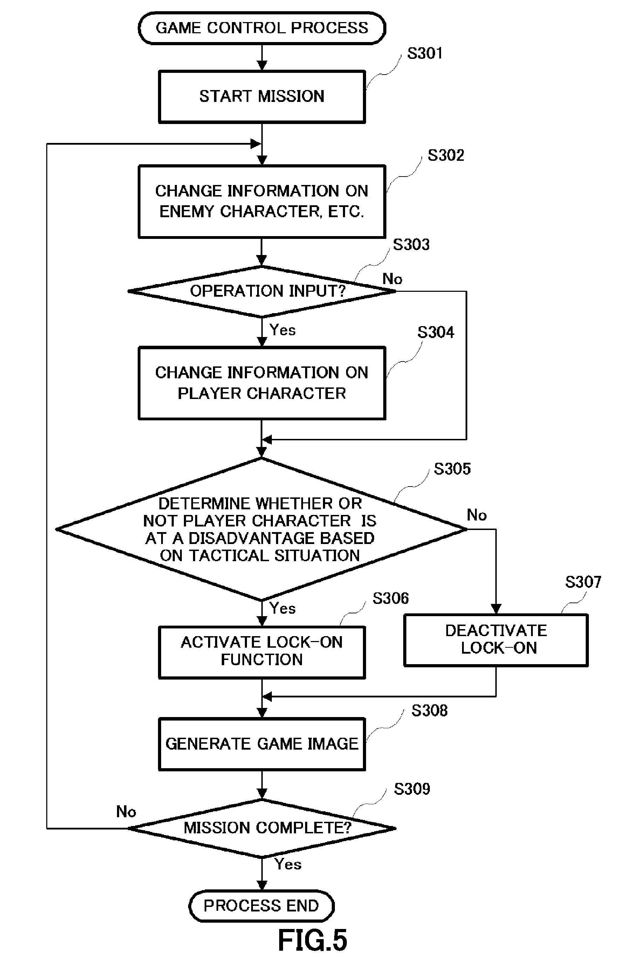

Next, an explanation will be given of an operation by the game apparatus 200 employing the above-explained configuration. FIG. 5 is a flowchart showing a flow of a game control process executed by the game apparatus 200. The game control process is started after a predetermined mission (a task that should be accomplished) is set.

First, the game apparatus 200 starts a game having a set mission taken as a task (step S301). When, for example, a mission is a task of destroying a plant placed in the back of an enemy field, the player operates the player character and starts infiltrating into the back of the enemy field so as not to be found by the enemy characters, etc., as much as possible.

The game apparatus 200 updates information on the enemy characters, etc., automatically updated based on predetermined logic and parameters, etc. (step S302).
For example, the game control unit 230 automatically updates the present position of each object and the moving direction thereof, etc., shown in FIG. 3B based on the predetermined movement logic, thereby moving the enemy character and the enemy vehicle, etc., appropriately.

The game apparatus 200 determines whether or not an operation input is given (step S303). That is, the game apparatus 200 determines whether or not the operation receiving unit 220 has received an instruction for a moving motion or an attacking motion, etc., for the player character.
When determining that no operation input has been given (step S303: NO), the game apparatus 200 progresses the process to step S305 to be discussed later.

Conversely, when determining that an operation input has been given (step S303: YES), the game apparatus 200 updates the information on the player character in accordance with the operation input received by the operation receiving unit 220 (step S304).
The game control unit 230 updates each piece of information shown in FIG. 3A in accordance with the operation input. When, for example, an instruction for a moving motion is received, the game control unit 230 updates the present position and the moving direction, etc., shown in FIG. 3A based on the contents of the instruction. When an instruction for an attacking motion is received, the target setting unit 250 sets the target for attack shown in FIG. 3A (when the lock-on function is deactivated) and starts firing in accordance with the contents of the instruction.
When the lock-on function is activated, the target setting unit 250 successively updates the value of the target for attack shown in FIG. 3A so as to track the object set as the target even if no operation input is given.

The game apparatus 200 determines whether or not the player character at a disadvantage based on the tactical situation (step S305).
For example, the determining unit 260 obtains the tactical situation based on the success/unsuccess of the attack from the player character to the object. The determining unit 260 determines whether or not the player character is at a disadvantage based on the obtained tactical situation.
More specifically, the determining unit 260 tallies the hit probability and the number of successful hits from the above-explained attack records shown in FIG. 3C to obtain the tactical situation. When those hit probability and number of successful hits are lower than the reference values, the determining unit 260 determines that the player character is at a disadvantage. As explained above, the subjects to be tallied for the determination are not limited to the hit probability and the number of successful hits, and a failing probability of attacks and the number of unsuccessful attacks may be the subjects to be tallied. Those probabilities and numbers may be a maximum value or an average value tallied for each predetermined period. Moreover, the number of successful hits or the number of unsuccessful attacks may be a tallied value of successive numbers of such attacks.

When determining that the player character is at a disadvantage (step S305: YES), the game apparatus 200 activates the lock-on function (step S306).
That is, the changing unit 270 changes the lock-on function shown in FIG. 3A in an activated status. Hence, the target setting unit 250 automatically sets the predetermined object as the target regardless of the operation given by the player.
More specifically, the target setting unit 250 sets the center of the object closest to the player character among the objects detected by the detecting unit 240 as the target. The target setting unit 250 automatically sets the center of the neighboring object as the target for attack shown in FIG. 3A, and automatically tracks the object even if such an object moves.

Conversely, when determining that the player character is not at a disadvantage (is predominant) (step S305: NO), the game apparatus 200 deactivates the lock-on function (step S307).
That is, the changing unit 270 changes the above-explained lock-on function shown in FIG. 3A so as to be deactivated. Hence, the target setting unit 250 sets the target in accordance with the operation given by the player. The target setting unit 250 sets the desired position (e.g., the head of the enemy character) of the object aimed by the player as the target in accordance with the moving operation of the sight given by the player.

The game apparatus 200 generates a game image (step S308).
That is, the image generating unit 280 generates a game image based on pieces of information obtained from the storing unit 210 and the game control unit 230. More specifically, the image generating unit 280 generates the above-explained game images shown in FIGS. 4A and 4B.
When the lock-on function is activated through the above-explained step S307, the image generating unit 280 generates the game image having the lock-on cursor LK superimposed on the center (in this case, the abdominal site of the enemy character) of the object OJ1 closest to the player character as shown in FIG. 4A.
Conversely, when the lock-on function is deactivated through the above-explained step S308, the image generating unit 280 generates the game image having the sight cursor SK moved (aimed) by the played and superimposed on an arbitrary site (in this case, the head of the enemy character) of the object OJ4 as shown in FIG. 4B.

The game apparatus 200 determines whether or not the mission has completed (step S309). For example, the game apparatus 200 determines whether or not the player character destroys the plant and the mission succeeds or whether or not the life value of the player character becomes zero and the mission is unsuccessful, etc.
When determining that the mission has not completed (step S309: NO), the game apparatus 200 returns the process to the above-explained step S302. The game apparatus 200 repeatedly executes the process from the step S302 to the step S309.
Conversely, when determining that the mission has completed (step S309: YES), the game apparatus 200 displays a predetermined completion message and a total score, etc., and terminates the game control process.

According to such a game control process, the activation/deactivation of the lock-on function is changed in accordance with the tactical situation. Hence, it becomes unnecessary for the player to manually change the activation/deactivation, and the player can focus on other operations. When the tactical situation is advantageous for the player character such that the player character get the objects smoothly and the presence of the player character is not perceived so far, the lock-on function is changed so as to be deactivated, and thus the player can aim and fire at the desired site (e.g., the head of the enemy character) on the object. Conversely, when the tactical situation is disadvantageous for the player character such that the player character encounters a large number of enemies, the lock-on function is changed so as to be activated, and thus the player can focus on a trigger operation. This facilitates the player to break through the disadvantageous situation.

### <Second Embodiment>

According to the above-explained first embodiment, the explanation was given of the case in which the determining unit 260 determines the tactical situation based on the success/unsuccess of the attack by the player character, but the determining unit 260 may determine the tactical situation based on other information. For example, the determining unit 260 may determine the tactical situation based on, for example, the movement frequency of the player character.
An explanation will now be given of a second embodiment of the present invention having a feature that the determining unit 260 determines the tactical situation based on, for example, the movement frequency of the player character.

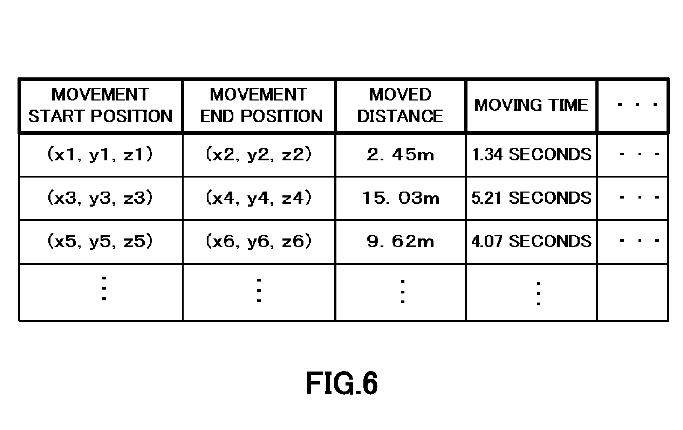

A game apparatus 200 of the second embodiment employs the same configuration as that of the game apparatus 200 of the first embodiment shown in FIG. 2.
The storing unit 210 stores the movement records of the player character shown in FIG. 6 instead of the above-explained attack records shown in FIG. 3C.
FIG. 6 shows information indicating example movement records of the player character. For example, a predetermined number of movement records in the newer order among past movements of the player character by the operations given by the player are stored. Moreover, the movement records by what corresponds to a predetermined time traced back from the present time may be stored. More specifically, the storing unit 210 manages information on a movement start position, a movement end position, a moved distance, and a moving time, etc., shown in FIG. 6 as the information on the movement records of the player character. The moved distance shown in FIG. 6 indicates the distance along the actual movement pathway, and the moving time indicates a time needed for such a movement.

The determining unit 260 determines the tactical situation based on the movement frequency and the movement distribution, etc., of the player character. For example, the determining unit 260 obtains the movement frequency and the movement distribution of the player character from the above-explained movement records shown in FIG. 6, and determines the tactical situation based on the obtained movement frequency and movement distribution.
More specifically, when the player character is moving toward a destination without any loss, the determining unit 260 determines that the tactical situation is advantageous for the player character. Conversely, when the player character moves with a large loss, e.g., when the player character frequently moves in various directions, the determining unit 260 determines that the tactical situation is disadvantageous for the player character.

The changing unit 270 changes activation/deactivation of the lock-on function based on the tactical situation determined by the determining unit 260 based on the movement frequency and the movement distribution of the player character.
When the determining unit 260 determines that the tactical situation is advantageous for the player character, like the first embodiment, the changing unit 270 changes the above-explained lock-on function shown in FIG. 3A so as to be deactivated. Conversely, when the determining unit 260 determines that the tactical situation is disadvantageous for the player character, the changing unit 270 changes the lock-on function shown in FIG. 3A in an activated status.

According to the above-explained game apparatus 200 of the second embodiment, the activation/deactivation of the lock-on function is changed in accordance with the tactical situation, and thus it becomes unnecessary for the player to manually change the activation/deactivation of the lock-on function. Accordingly, the player can focus on other operations. When the tactical situation is advantageous for the player character such that the player character is moving toward the destination without a loss, the lock-on function is changed so as to be deactivated, and thus the player can aim and fire at the desired site (e.g., the head of the enemy character) on the target object. Conversely, when the tactical situation is disadvantageous for the player character such that the player character frequently moves in various directions, the lock-on function is changed so as to be activated, and thus the player can focus on a trigger operation. This facilitates the player to break through the disadvantageous situation.
As a result, the game apparatus 200 of the second embodiment can also appropriately assist a beginner, etc., to play the game.

### <Third Embodiment>

The game apparatus 200 may determine the tactical situation based on further different information from those of the first and second embodiments. For example, the game apparatus 200 may determine the tactical situation based on information on, for example, whether or not the player character and the object are trapped with each other (presence/absence of a trap).
An explanation will now be given of a third embodiment of the present invention having a feature that the determining unit 260 determines the tactical situation based on the presence/absence of a trap.

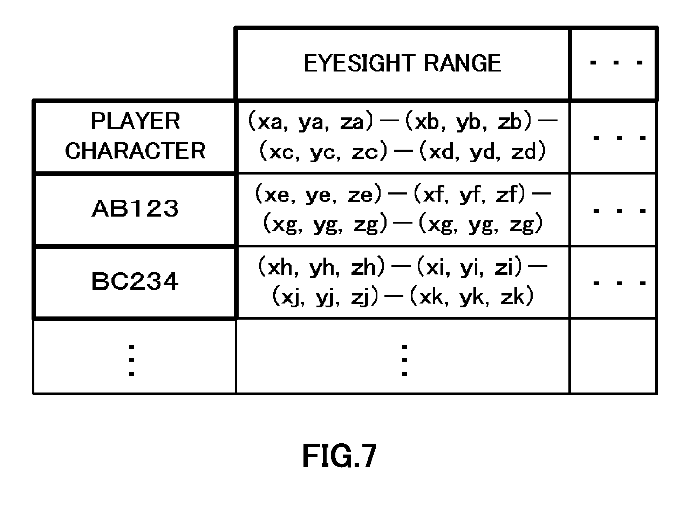

A game apparatus 200 of the third embodiment employs the same configuration as that of the game apparatus 200 of the first embodiment shown in FIG. 2.
The storing unit 210 stores an eyesight range shown in FIG. 7 instead of the above-explained attack records shown in FIG. 3C.
FIG. 7 shows information indicating an example eyesight range of the player character and that of each object. The eyesight range is set together with an application of a predetermined eyesight angle, etc., thereto based on the above-explained present position and eyesight direction shown in FIGS. 3A and 3B. When there is an obstacle (e.g., a building or a natural object) that interrupts the eyesight range in the game, an eyesight range having such a portion deleted is set accordingly.

The determining unit 260 determines the tactical situation based on the presence/absence of the trap of the object from the player character and the presence/absence of the trap of the player character from the object. For example, the determining unit 260 obtains the presence/absence of the trap based on whether or not the present position of an opponent is included within the above-explained eyesight range shown in FIG. 7, and determines the tactical situation based on the presence/absence of the obtained trap.
More specifically, the determining unit 260 obtains the presence/absence of the trap of the object by the player character based on whether or not the present position of each object shown in FIG. 3B is included in the eyesight range of the player character shown in FIG. 7. Conversely, the determining unit 260 obtains the presence/absence of the trap of the player character from the object based on whether or not the present position of the player character shown in FIG. 3A is included in the eyesight range of each object (i.e., the object indicated by the object ID) shown in FIG. 7. The determining unit 260 determines the tactical situation based on the presence/absence of the bidirectional traps.
As an example, when the object does not trap the player character but the player character traps the object, the determining unit 260 determines that the tactical situation is advantageous for the player character. Conversely, when the player character does not trap the object but the object traps the player character, the determining unit 260 determines that the tactical situation is disadvantageous for the player character. In addition, when both player character and object are trapped with each other, the determining unit 260 may determine that the tactical situation is advantageous or disadvantageous for the player character based on the number of traps of the player character or the objects.

The changing unit 270 changes activation/deactivation of the lock-on function based on the tactical situation determined by the determining unit 260 based on the presence/absence of such a trap.
When the determining unit 260 determines that the tactical situation is advantageous for the player character, like the first embodiment, the changing unit 270 changes the lock-on function shown in FIG. 3A in a deactivated status. Conversely, when the determining unit 260 determines that the tactical situation is disadvantageous for the player character, the changing unit 270 changes the lock-on function shown in FIG. 3A in an activated status.

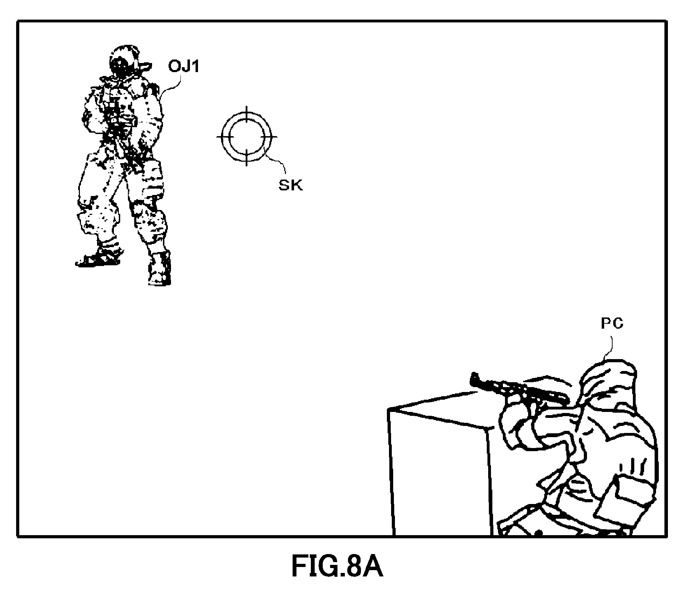

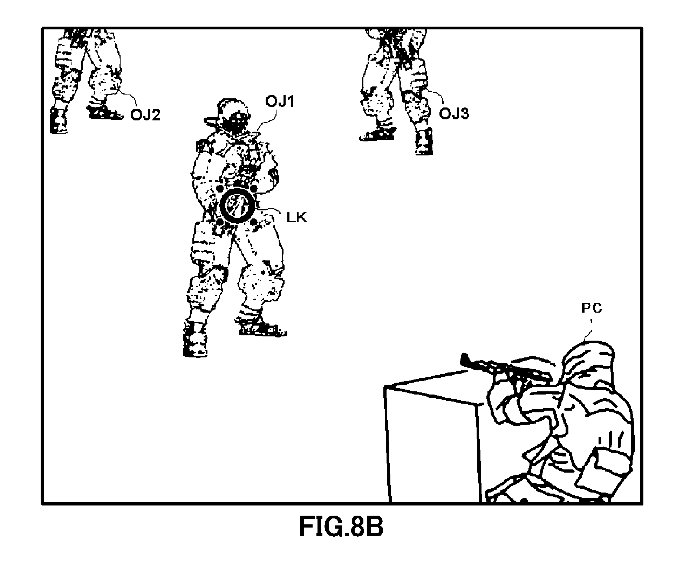

This will be explained with a specific example case. For example, when an object OJ1 does not perceive the presence of a player character PC as shown in FIG. 8A, the determining unit 260 determines that the tactical situation is advantageous for the player character, and the changing unit 270 changes the lock-on function in a deactivated status. Hence, the player is capable of giving operations of, for example, freely moving the sight cursor SK and aiming at an arbitrary site (e.g., the head of the enemy character) of the object OJ1 at will.
When the object OJ1, etc., begins to perceive the presence of the player character PC from that condition, for example, as shown in FIG. 8B, objects OJ1 to OJ3 come closer to the player character PC. When such a melee starts, the determining unit 260 determines that the tactical situation is now disadvantageous for the player character, and the changing unit 270 changes the lock-on function into an activated status. Hence, as shown in FIG. 8B, the lock-on cursor LK is set to the center (e.g., the abdominal site of the enemy character) of the closest object OJ1 among the coming objects OJ1 to OJ3, and the player can focus on a trigger operation.

According to such a game apparatus 200 of the third embodiment, also, activation/deactivation of the lock-on function is changed in accordance with the tactical situation, and thus it becomes unnecessary for the player to manually change the activation/deactivation of the locking function. Hence, the player can focus on other operations. When the tactical situation is advantageous for the player character such that the object does not trap the player character but the player character traps the object, the lock-on function is changed into a deactivated status, and thus the player can aim and fire at the desired site (e.g., the head of the enemy character) on the target object. Conversely, when the tactical situation is disadvantageous for the player character such that the player character does not trap the object but the object traps the player character, the lock-on function is changed into an activated status, and thus the player can focus on a trigger operation. This facilitates the player to break through the disadvantageous situation.
As a result, the game apparatus 200 of the third embodiment can appropriately assist a beginner, etc., to play the game.

### <Fourth Embodiment>

The game apparatus 200 may determine the tactical situation based on further different information from those of the first to third embodiments. The game apparatus 200 may determine the tactical situation based on information on, for example, whether or not the player character and the object are attacking each other (presence/absence of an attack).
An explanation will now be given of a fourth embodiment of the present invention having a feature that the determining unit 260 determines the tactical situation based on the presence/absence of an attack.

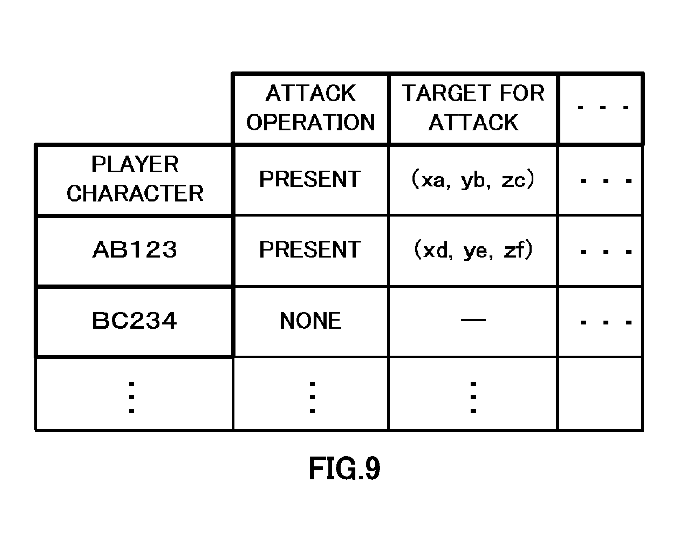

A game apparatus 200 of the fourth embodiment employs the same configuration as that of the game apparatus 200 of the first embodiment shown in FIG. 2.
The storing unit 210 stores an attacking situation shown in FIG. 9 instead of the above-explained attack records shown in FIG. 3C.
FIG. 9 shows information indicating an example attacking situation of the player character and that of each object. The attacking situation has the presence/absence of an attack by the player character and the presence/absence of each object, and, respective targets for attack (in the presence of an attack) set accordingly.

The determining unit 260 determines the tactical situation based on the presence/absence of an attack by the player character on the object, and the presence/absence of an attack by the object on the player character. For example, when the above-explained attack motion shown in FIG. 9 is present, the determining unit 260 obtains the presence/absence of an attack on an opponent based on the target for attack and the present position of the opponent, and determines the tactical situation based on the presence/absence of the carried-out attack.
More specifically, the determining unit 260 obtains the presence/absence of an attack by the player character on the object based on whether or not the attacked target by the player character shown in FIG. 9 is within a predetermined range around the present position of each object shown in FIG. 3B. In this case, the determining unit 260 may determine whether or not such an attack was actually successful.
Conversely, the determining unit 260 obtains the presence/absence of an attack by the object on the player character based on whether or not the attack target of the object (in this case, the object indicated by the object ID of AB123) which has attacked and shown in FIG. 8 is within a predetermined range around the present position of the player character shown in FIG. 3A. In this case, the determining unit 260 may determine whether or not such an attack was actually successful. The determining unit 260 determines the tactical situation based on the presence/absence of such bidirectional attacks.
As an example, when the object does not attack the player character but the player character attacks the object, the determining unit 260 determines that the tactical situation is advantageous for the player character. Conversely, when the player character does not attack the object but the object attacks the player character, the determining unit 260 determines that the tactical situation is disadvantageous for the player character. In addition, when the player character and the object attack the opponent with each other, the determining unit 260 may determine whether the tactical situation is advantageous or disadvantageous for the player character based on the number of attacks on the opponent.

The changing unit 270 changes activation/deactivation of the lock-on function based on the tactical situation determined by the determining unit 260 based on the presence/absence of an attack.
The changing unit 270 changes the above-explained lock-on function shown in FIG. 3A into a deactivated status when the determining unit 260 determines that the tactical situation is advantageous for the player character as in the first embodiment. Conversely, when the determining unit 260 determines that the tactical situation is disadvantageous for the player character, the changing unit 270 changes the lock-on function shown in FIG. 3A into an activated status.

According to such a game apparatus 200 of the fourth embodiment, also, activation/deactivation of the lock-on function is changed in accordance with the tactical situation, and thus it becomes unnecessary for the player to manually change the activation/deactivation of the lock-on function. Accordingly, the player can focus on other operations. When the tactical situation is advantageous for the player character such that the object does not attack the player character but the player character attacks the object, the lock-on function is changed so as to be deactivated, and thus the player can aim and fire at a desired site (e.g., the head of the enemy character) of the object. Conversely, when the tactical situation is disadvantageous for the player character such that the player character does not attack the object but the object attacks the player character, the lock-on function is changed so as to be activated, and the player can focus on a trigger operation. This facilitates the player to break through the disadvantageous situation.
As a result, the game apparatus 200 of the fourth embodiment can also appropriately assist a beginner, etc., to play the game.

### <Other Embodiments>

In the above-explained embodiments, the explanation was given of the case in which it is determined whether or not the tactical situation is advantageous or disadvantageous for the player character, but what is determined is optional. For example, the determining unit 260 may determine the degree of proficiency of the player.
More specifically, the determining unit 260 determines the degree of proficiency of the player based on the detail of the motion of the player character. As an example, the degree of proficiency of the player can be determined based on, for example, a distance that the player character was able to move without being found by objects, and the number of objects attacked by the player character through weapons other than a gun (e.g., a knife).
When the determining unit 260 determines that the degree of proficiency of the player is high, the changing unit 270 changes the above-explained lock-on function shown in FIG. 3A into a deactivated status. Conversely, when the determining unit 260 determines that the degree of proficiency is not high, the changing unit 270 changes the above-explained lock-on function shown in FIG. 3A into an activated status.
In this case, the determining unit 260 determines the degree of proficiency of the player for each operation given during the game every time such an operation is given, and the changing unit 270 changes activation/deactivation of the lock-on function based on the determination result every time such a determination is made. Hence, as the player improves the proficiency, the percentage of the operations resulting in a determination result that the degree of proficiency is high among the operations given by the player increases. As a result, the percentage of the deactivation of the lock-on function becomes high for the player with a higher degree of proficiency.

The changing unit 270 may change the probability of making the lock-on function activated based on the determined degree of proficiency. For example, it is presumed that the changing unit 270 changes activation/deactivation of the lock-on function in accordance with a set probability. Moreover, the determining unit 260 sets the probability of making the lock-on function activated to be lowered inversely proportional to the determined degree of proficiency.
In this case, when, for example, the player is a beginner, the determined degree of proficiency is low, and thus the percentage of making the lock-on function activated becomes high. Conversely, when the player is an expert, the determined degree of proficiency is high, and thus the percentage of making the lock-on function activated becomes low (i.e., the percentage of making the lock-on function deactivated becomes high).

In addition, the determining unit 260 may determine the degree of proficiency of the player in a particular tactical situation, and the changing unit 270 may change activation/deactivation of the lock-on function in accordance with the determined degree of proficiency.
For example, the determining unit 260 determines the degree of proficiency of the player in a melee. The changing unit 270 changes activation/deactivation of the lock-on function based on the determined degree of proficiency.
In this case, when, for example, the player is used to a melee, the determined degree of proficiency becomes high, and thus the percentage of making the lock-on function deactivated becomes high. Conversely, when the player is not used to a melee, the determined degree of proficiency becomes low, and thus the percentage of making the lock-on function activated becomes high.
The activation/deactivation of the lock-on function is changed in accordance with the degree of proficiency of the player as explained above. Hence, it becomes possible to appropriately assist a beginner, etc., to play the game.

According to the above-explained embodiments, the explanation was given of the case in which the player character attacks the object using a gun (e.g., a rifle) but the weapon of the player character is not limited to such a gun and is optional. For example, the present invention can be applied to a case in which the player character attacks the object using a sword or a spear, etc. That is, the present invention can be likewise applied to action games that have a lock-on function of locking on a target for attack even if an attack is carried out through a sword, etc.

In the above-explained embodiments, the explanation was given of an example case in which a solo game apparatus 200 provides the action game, but the present invention can be applied to a so-called social game.
This will be explained in more detail with an example case in which the game apparatus 200 has a wireless communication function, etc., and is executable a web browser.
The game apparatus 200 establishes a connection with a social networking service (SNS) through a predetermined access point. The social networking service provides an API (Application Programming Interface) operable over the web browser to the game apparatus 200. The game apparatus 200 executes the API over the web browser, and provides the above-explained action game as a social game.

As explained above, according to the present invention, it becomes possible to provide a game apparatus, a game control method, a computer-readable non-transitory information recording medium recording therein a program, and a program which can appropriately assist a beginner, etc., to play a game.

Having described and illustrated the principles of this application by reference to one or more preferred embodiments, it should be apparent that the preferred embodiments may be modified in arrangement and detail without departing from the principles disclosed herein and that it is intended that the application be construed as including all such modifications and variations insofar as they come within the spirit and scope of the subject matter disclosed herein.

## Claims

1. A game apparatus that has a lock-on function of locking on, for a player character, a predetermined object as a target for attack, the game apparatus,comprising:
a detector that detects the object present within a predetermined range according to a position of the player character;
a determiner that determines a tactical situation of the player character with regards to the detected object; and
a changer that changes activation/deactivation of the lock-on function based on the determined tactical situation.

2. The game apparatus according to claim 1, wherein the determiner determines whether the tactical situation is advantageous or disadvantageous for the player character, and
the changer changes the lock-on function in a deactivated status when the determiner determines that the tactical situation is advantageous for the player character, and changes the lock-on function in an activated status when the determiner determines that the tactical situation is disadvantageous for the player character.

3. The game apparatus according to claim 1 or 2, wherein **characterized in that**
the determiner determines the tactical situation based on the success/unsuccess of an attack from the player character to the object.

4. The game apparatus according to any of claims 1 to 3, wherein the determiner determines the tactical situation based on a movement frequency or a movement distribution of the player character.

5. The game apparatus according to any of claims 1 to 4, wherein the determiner determines the tactical situation based on presence/absence of a trap by the player character for the object or presence/absence of a trap by the object for the player character.

6. The game apparatus according to any of claims 1 to 5, wherein the determiner determines the tactical situation based on presence/absence of an attack by the player character for the object or presence/absence of an attack by the object for the player character.

7. The game apparatus according to any of claims 1 to 6, wherein the determiner determines a degree of proficiency of a player based on a detail of a motion of the player character, and
the changer changes the lock-on function into a deactivated status when the determiner determines that the degree of proficiency is high, and changes the lock-on function into an activated status when the determiner determines that the degree of proficiency is low.

8. The game apparatus according to any of claims 1 to 7, wherein the determiner determines a degree of proficiency of a player, and
the changer drives a probability for activating the lock-on function variable in accordance with the determined degree of proficiency.

9. The game apparatus according to any of claims 1 to 8, wherein the determiner determines a degree of proficiency of a player in a particular tactical situation, and
the changer changes activation/deactivation of the lock-on function in accordance with the determined degree of proficiency.

10. A game control method executed by a game apparatus which comprises a detector, a determiner, and a changer and which realizes a lock-on function of locking on, for a player character, a predetermined object as a target for attack, the method comprising:
a detecting process for causing the detector to detect the object present within a predetermined range according to a position of the player character;
a determining process for causing the determiner to determine a tactical situation of the player character with regards to the detected object; and
a changing process for causing the changer to change activation/deactivation of the lock-on function based on the determined tactical situation.

11. A computer-readable non-transitory program that causes a computer which realizes a lock-on function of locking on, for a player character, a predetermined object as a target for attack to function as:
a detector that detects the object present within a predetermined range according to a position of the player character;
a determiner that determines a tactical situation of the player character with regards to the detected object; and
a changer that changes activation/deactivation of the lock-on function based on the determined tactical situation.

12. A computer-readable recording medium on which a computer-readable non-transitory program is stored that causes a computer which realizes a lock-on function of locking on, for a player character, a predetermined object as a target for attack to function as:
a detector that detects the object present within a predetermined range according to a position of the player character;
a determiner that determines a tactical situation of the player character with regards to the detected object; and
a changer that changes activation/deactivation of the lock-on function based on the determined tactical situation.
